# EUROPEAN PATENT SPECIFICATION

(11) **EP 1 086 960 B1**
(45) Date of publication and mention of the grant of the patent: **27.07.2011**
(21) Application number: 99923912.2
(22) Date of filing: 04.06.1999
(51) Int. Cl.: C08F 8/32, C08F 8/46, C08F 110/08, C08F 210/16, C10M 133/56, C10M 163/00, C10M 159/12

(54) **Use of a lubricating oil additive containing a succinimide and lubricating oil composition for internal combustion engine**
Verwendung eines Schmieröladditivs enthaltend eine Succinimidverbindung und Schmierölzusammensetzung für Verbrennungsmotor
Utilisation d'un additif d'huile lubrifiante contenant un composé de succinimide et composition d'huile lubrifiante destinée à un moteur à combustion interne

(30) Priority: 05.06.1998 JP 15714998
(43) Date of publication of application: 28.03.2001
(73) Proprietor: IDEMITSU KOSAN CO., LTD., Tokyo 100-0005 (JP)
(72) Inventor: KATAFUCHI, Tadashi, Chiba 299-0107 (JP); NAKANO, Takeshige, Chiba 299-0107 (JP)
(74) Representative: Gille Hrabal Struck Neidlein Prop Roos
(86) International application number: PCT/JP1999/003001
(87) International publication number: WO 1999/064481

(56) References cited:
- EP-A- 0 839 894
- JP-A- 6 228 574
- JP-A- 6 287 580
- JP-A- 58 093 706
- US-A- 3 172 892
- US-A- 4 048 080

## Description

### TECHNICAL FIELD

The present invention relates to the use of a lubricating oil additive containing a succinimide compound, as well as a lubricating oil composition containing the compound for internal combustion engines.

### BACKGROUND ART

For the purpose of promoting the acid-neutralizing effect of metal-containing, detergent dispersant in lubricating oils, succinimide compounds are combined with the agents and added to various lubricating oils. For example, hereinunder referred to is the use of succinimide compounds in cylinder oil for ships, one type of lubricating oils for internal combustion engines.

In general, since fuel to be used in engines for ships that are lubricated with cylinder oil has a large sulfur content, the exhaust gas from such engines contains a large amount of SOx (sulfur oxides). SOx react with water in the exhaust gas to give sulfuric acid. The sulfuric acid thus formed in large quantities breaks the oil film of cylinder oil for ships, thereby corroding and wearing the parts constituting engines. In particular, cylinder liners and piston rings are much corroded and worn by the acid. Therefore, it is extremely important for lubricating oil to have the ability of resisting such corrosion and wear. Heretofore, a suitable amount of a overbased, metal-containing, detergent dispersant has been added to lubricating oil, by which sulfuric acid formed in the oil is neutralized, resulting in that cylinder liners and piston rings are protected from being corroded or worn. However, even in engines for ships, low-quality fuel having a high sulfur content has become much used in these days for reducing the fuel cost. Therefore, the SOx content of the exhaust gas from those engines tends to increase. Such a large amount of sulfuric acid as formed through the reaction of much SOx with water could not be neutralized to such a degree that the thus-neutralized acid does no more corrode and wear engine parts, even if the amount of the overbased, metal-containing, detergent dispersant to be added to engine lubricating oil is merely increased. Given that situation, a combination of the metal-containing, detergent dispersant and an ashless dispersant has been tried, thereby promoting the acid-neutralizing effect of the metal-containing, detergent dispersant in order to protect cylinder liners and piston rings from being corroded and worn. For example, Japanese Patent Laid-Open No. 271885/1994 discloses an additive comprising calcium salicylate and a bis-type alkenylsuccinimide in its Example, in which, however, the alkenylsuccinimide used requires the addition of an amine-molybdenum complex thereto in order to attain the intended object. Therefore, the development of succinimide compounds of a novel type is desired.

Japanese patent application JP A 62-28574 describes succinimides which are suitable as detergent additives in fuel and lubricating formulations. The document defines a lubricating oil in its claim 18. The document does not describe the kinematic viscosity of the lube oil, the presence of overbased sulfonates and phenates of alkaline earth metals, the total base number of these overbased sulfonates and phenates of alkaline earth metals or the relative amounts of the components in the lube oil.

EP A 0 588 368 deals with the preparation of mixtures of sulfurized alkaline earth metals of salicylic acid compounds and not with the use of succinimide compounds. The document describes salicylate/phenate mixtures which are suitable to be added to lubricating oils.

EP A 0 082 601 deals with a process for the preparation of polyalkenyl succinic anhydrides.

US A 3 172 892 describes the preparation of amides from high molecular weight succinic acids and succinic anhydrides with an ethylene polyamine. The possible generation of succinimides is mentioned only shortly. The document deals with a process for the preparation of polyalkenyl succinic anhydrides, their use as lubricating oil dispersant additives is only mentioned in the introductory part in general terms. The presence of certain succinic amines in a lubricating oil is mentioned.

EP A 0 839 894 describes a succinic acid compound which is a bis-type succinic imide. A typical example appears to be the alkenylsuccininic imide of formula (6).

US A 0 048 080 describes in its claim 1 lube oil compositions containing a bis-type succinic imide compound. The present invention does not deal with this single type of succinic imide compounds.

On the other hand, it is known that the degree of acid neutralization in engines has some relation to the corrosion and wear of cylinder liners and piston rings. Therefore, the degree of acid neutralization in lubricating oil used in internal combustion engines shall indicate the ability of the lubricating oil to protect cylinder liners and piston rings from being corroded and worn.

### DISCLOSURE OF THE INVENTION

The present invention has been made in consideration of the above-mentioned viewpoint, and its object is to provide the novel use of a lubricating oil additive containing a succinimide compound, and to provide a lubricating oil composition to be used in internal combustion engines that discharge much SOx. Specifically, the lubricating oil composition for internal combustion engines of the invention exhibits good corrosion resistance and wear resistance when used in such internal combustion engines that discharge much SOx.

Having specifically noted the degree of acid neutralization in lubricating oil for engines, we, the present inventors have assiduously studied and, as a result, have found the novel use of succinimide compounds. On the basis of this finding, we have completed the present invention.

Specifically, the first aspect of the invention includes use of a lubricating oil additive containing from 0.25 to 80% by weight of a succinimide compound as an ashless detergent dispersant for lubricating oils, wherein the succinimide compound is obtainable by reacting a polyamine having a carbon/nitrogen weight ratio of from 0.85 to 1.25 with a succinic acid compound of the following general formula (I) or (II) in a molar ratio to the polyamine of from 0.95 to 1.40: 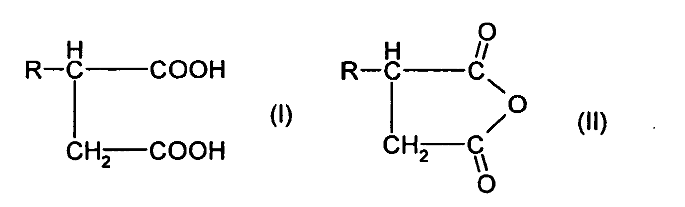 wherein R represents a polybutenyl group or an ethylene-propylene copolymer residue having a number-average molecular weight of from 700 to 2,300.

The second aspect of the invention is a lubricating oil composition for internal combustion engines, which comprises a lube base oil having a kinematic viscosity at 100°C of from 10 to 25 mm²/sec, and (a) at least one compound selected from the group consisting of overbased sulfonates and phenates of alkaline earth metals, and (b) the succinimide compound as described above for the first aspect of the present invention, wherein the lubricating oil composition has a total base number of from 40 to 100 mg-KOH/g and the component (a) has a total base number of from 100 to 600 mg-KOH/g as measured according to the perchloric acid method in JIS K-2501, the component (a) accounts for from 5 to 30 % by weight and the component (b) for from 0.1 to 3 % by weight based on the total weight of the composition.

### BEST MODES OF CARRYING OUT THE INVENTION

Embodiments of the invention are described hereinunder.

In the first aspect of the invention, the polyamine to be reacted with a succinic acid compound has a carbon/nitrogen weight ratio of from 0.85 to 1.25, including, for example, diethylenetriamine (1.14), ethylenediamine (0.86), etc. The polyamine may be combined with propylenediamine (1.29), triethylenetetramine (1.29) to such a degree that the resulting mixture can have the defined carbon/nitrogen weight ratio. Polyamines having a carbon/nitrogen weight ratio of smaller than 0.85 are unfavorable since their reaction products do not improve the rate of acid neutralization; and those having a carbon/nitrogen weight ratio of larger than 1.25 are also unfavorable since their reaction products could have little capability of acid neutralization.

The succinic acid compound to be reacted with the polyamine is represented by the following general formula (I) or (II): 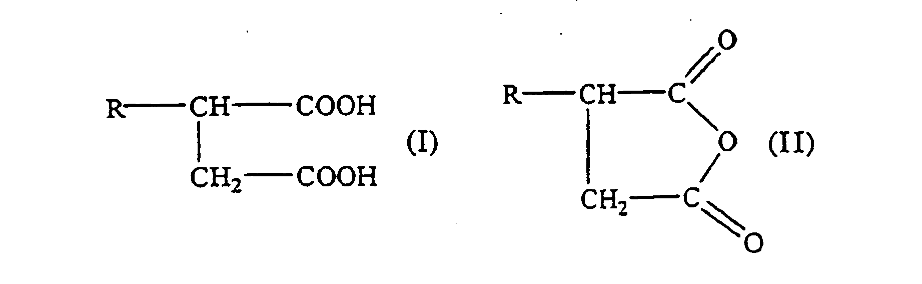 wherein R represents an alkenyl group derived from an olefinic polymer having a number-average molecular weight of from 700 to 2,300. The alkenyl group is a polybutenyl group or an ethylene-propylene copolymer residue.

The acid compound where R is an alkenyl group is obtained by reacting a polybutene or an ethylene-propylene copolymer with maleic anhydride or maleic acid.

In the invention, the polyamine is reacted with the succinic acid compound in a molar ratio to the polyamine of at most 1.40, at 100 to 250°C for 2 to 8 hours, and thereafter the non-reacted polyamine is evaporated away under reduced pressure. If the molar ratio is larger than 1.40, it is unfavorable since the reaction products do not improve the rate of acid neutralization. The molar ratio falls between 0.95 and 1.40. Even if the molar ratio is smaller than 0.95, it will have no negative influence on the reaction products for their capability of acid neutralization, but will be uneconomical as the non-reacted polyamine will increase.

It is presumed that the reaction products, succinimide compounds are of a novel type of mixtures composed of bis-type compounds, mono-type compounds and other types of compounds judging from the features of the product.

The lubricating oil additive used according to the invention contains from 0.25 to 80 % by weight of the succinimide compound. The other components include a diluent (lubricating oil) and other additives that will be mentioned hereunder. The lubricating oil additive of the invention is used as an ashless detergent dispersant for lubricating oils such as cylinder oil for ships, 4-cycle diesel engine oil, gasoline engine oil, etc.

The second aspect of the invention is a lubricating oil composition for internal combustion engines, which comprises a lube base oil, and (a) at least one compound selected from the group consisting of overbased sulfonates and phenates of alkaline earth metals, and (b) the succinimide compound mentioned above.

The lube base oil to be in the lubricating oil composition of the invention may be any of mineral oils and/or synthetic oils. Those mineral oils and synthetic oils are not specifically defined, and may be any ones generally used as base oils in lubricating oil for internal combustion engines. However, used are those having a kinematic viscosity at 100°C of from 10 to 25 mm²/sec. If the kinematic viscosity of the base oil used is too high, the fuel cost increases unfavorably. On the contrary, if too low, the lubricating oil evaporates too much, resulting in that the oil consumption increases unfavorably. The pour point of the base oil, which indicates its low-temperature fluidity, is not specifically defined, but is preferably not higher than -10°C.

Known are various mineral oils and synthetic oils satisfying those requirements, from which may be selected appropriate ones for use in the invention. For example, mineral oils include paraffinic mineral oils, naphthenic mineral oils and intermediate base mineral oils. Specific examples of such mineral oils for use in the invention are light neutral oils, medium neutral oils, heavy neutral oils, bright stocks and others having been purified through treatment with solvents or through hydrogenation.

Synthetic oils usable in the invention include, for example, poly-α-olefins, α-olefin copolymers, polybutenes, alkylbenzenes, polyol-esters, esters of dibasic acids, polyoxyalkylene glycols, polyoxyalkylene glycol esters, polyoxyalkylene glycol ethers, etc.

These base oils can be used in the invention either singly or as combined. As the case may be, mineral oils and synthetic oils can be combined for use in the invention.

The components (a) and (b) to be added to the lube base oil are described hereinunder.

### Component (a)

The component (a) includes compounds selected from the group consisting of overbased sulfonates and phenates with alkaline earth metals. It has a total base number (TBN) of from 100 to 600 mg-KOH/g (as measured according to the perchloric acid method in JIS K-2501). If its total base number is too low, the component must be added to the lube base oil in large quantities in order to ensure its effect, which, however, is uneconomical. If too high, it is unfavorable since the ash content of the lubricating oil will increase thereby often forming a large amount of deposits in the oil used long.

The overbased, alkaline earth metal sulfonates are alkaline earth metal salts of various sulfonic acids, which are generally obtained by carbonating various alkaline earth metal salts of sulfonic acids. The sulfonic acids include, for example, aromatic petroleum sulfonic acids, alkylsulfonic acids, arylsulfonic acids, and alkylarylsulfonic acids. As specific examples, mentioned are dodecylbenzenesulfonic acid, dilaurylcetylbenzenesulfonic acid, paraffin wax-substituted benzenesulfonic acids, polyolefin-substituted benzenesulfonic acids, polyisobutylene-substituted benzenesulfonic acids, naphthalenesulfonic acid, etc.

The overbased, alkaline earth metal phenates are alkaline earth metal salts of alkylphenols or alkylsulfidophenols, which are generally obtained by carbonating alkaline earth metal salts of alkylphenols or alkylsulfidophenols.

The alkaline earth metals for those sulfonates and phenates include, for example, calcium, barium, and magnesium. In view of the effect of the salts, preferred is calcium.

In the invention, the component (a) may be one or more of those salts. The amount of the component (a) to be in the composition is from 5 to 30 % by weight based on the total weight of the composition. If its amount is smaller than 5 % by weight, the synergistic, acid-neutralizing effect of the component (a) as combined with the component (b) will be unsatisfactory. However, even if the component (a) is added to the composition in an amount of larger than 40 % by weight, the addition of such a large amount of the component (a) will not reflect on the increase in the intended effect.

### Component (b)

The succinimide compound mentioned above is used as the component (b). One or more of the compounds may be added to the composition. The amount of the component (b) is from 0.1 to 3 % by weight, preferably from 0.3 to 2 % by weight based on the total weight of the composition. If its amount is smaller than 0.1 % by weight, the synergistic, acid-neutralizing effect of the component (b) as combined with the component (a) will be unsatisfactory. However, even if the component (b) is added to the composition in an amount of larger than 3 % by weight, the addition of such a large amount of the component (b) will not reflect on the increase in the intended effect.

Regarding the total base number of the composition of the invention, if it is too low, the acid-neutralizing effect of the composition is poor; but if too high, the composition produces a large amount of deposits. For these reasons, therefore, it is desirable that the composition is controlled to have a total base number of from 40 to 100 mg-KOH/g (as measured according to the perchloric acid method in JIS K-2501).

The lubricating oil composition for internal combustion engines of the second aspect of the invention is obtained by adding the components (a) and (b) to lube base oil. In general, in order to improve the physical properties of the lubricating oil composition, various additives, such as antioxidants, viscosity index improvers, metal deactivators, pour point depressant, anti-wear agents, defoaming agents and extreme pressure agents, may be added to the composition. Various types of those additives are known, any of which can be used in the invention with no limitation.

As antioxidants, known are amine compounds such as alkylated diphenylamines, phenyl-α-naphthylamines, etc.; phenolic compounds such as 2,6-di-t-butylphenol, 4,4'-methylenebis-(2,6-di-t-butylphenol), etc. In general, the antioxidant may be added to the composition in an amount of from 0.05 to 2 % by weight based on the total weight of the composition.

As viscosity index improvers, for example, known are polymethyl methacrylates, polyisobutylenes, ethylene-propylene copolymers, styrene-isoprene copolymers, hydrogenated styrene-butadiene copolymers, etc. In general, the viscosity index improver may be added to the composition in an amount of from 0.5 to 30 % by weight based on the total weight of the composition.

As metal deactivators, for example, known are benzotriazoles, thiadiazoles, and alkenylsuccinates. In general, the metal deactivator may be added to the composition in an amount of from 0.005 to 1 % by weight based on the total weight of the composition.

As pour point depressant, for example, known are polyalkyl methacrylates, and polyalkylstyrenes. In general, the pour point depressant may be added to the composition in an amount of from 0.01 to 1 % by weight based on the total weight of the composition.

As anti-wear agents, for example, known are organomolybdenum compounds such as MoDTP (molybdenum dithiophosphate), MoDTC (molybdenum dithiocarbamate), etc.; organozinc compounds such as ZnDTP (zinc dithiophosphate), etc.; organoboron compounds such as alkylmercaptyl borates, etc.; and also other anti-wear agents of solid lubricants such as graphite, molybdenum disulfide, antimony sulfide, boron compounds, polytetrafluoroethylenes, etc. In general, the anti-wear agent may be added to the composition in an amount of from 0.1 to 3 % by weight based on the total weight of the composition.

As defoaming agents, for example, known are dimethylpolysiloxanes and polyacrylates. In general, the defoaming agent may be added to the composition in an amount of from 0.0005 to 1 % by weight based on the total weight of the composition.

As extreme pressure agents, for example, known are sulfidized oils and fats, and diallyl disulfide. In general, the extreme pressure agent may be added to the composition in an amount of from 0.1 to 15 % by weight based on the total weight of the composition.

### [Examples]

The invention is described in more detail with reference to the following Examples, which, however, are not intended to restrict the scope of the invention.

### [Example 1]

Polybutenylsuccinic anhydride of which the polybutenyl group had a number-average molecular weight of 1000 was reacted with diethylenetriamine (having a C/N weight ratio of 1.14) in a molar ratio of 1/1, at 100°C for 1 hour and then at 150°C for 4 hours. The non-reacted compounds were removed through distillation under reduced pressure, and a succinimide compound was obtained. As base oil, herein used was a paraffinic mineral oil (having a kinematic viscosity at 100°C of 20 mm²/sec). To the base oil, added were 0.5 % by weight of the succinimide compound and 14.0 % by weight of overbased calcium sulfonate having a total base number of 510 (as measured according to the perchloric acid method in JIS K-2501 - the same shall apply to hereunder) to prepare a lubricating oil composition having a total base number of 71.4 mg-KOH/g. The composition was tested for its capability of acid neutralization and stability according to the methods mentioned below. The data obtained are given in Table 1. (1) Method for evaluating the capability of acid neutralization:

100 g of the lubricating oil composition to be tested was put into a 1-liter, branched, round-bottom flask, and heated up to 200°C, to which was added 1 ml of 35.9 N sulfuric acid, and stirred. Carbon dioxide gas was formed in the flask through acid neutralization of the following reaction formula (1):

CaCO₃ + H₂SO₄ → CaSO₄ + H₂O + CO₂↑ (1)

From the pressure variation caused by the thus-formed carbon dioxide gas (the inner pressure increased in 30 seconds after the addition of sulfuric acid), the capability of acid neutralization of the sample tested was obtained. The sample giving a larger pressure increase is evaluated to have a higher corrosion, wear-resisting ability.

### (2) Stability Test:

The lubricating oil composition to be tested was stored for 10 months at room temperature, and its stability was measured. In Table 1 below, "O" indicates that the stored sample gave no precipitate, and "X" indicates that the stored sample gave some precipitate.

### [Example 2]

A lubricating oil composition was prepared in the same manner as in Example 1, except that 7.0 % by weight of overbased calcium sulfonate (having a total base number of 510 mg-KOH/g) and 14.3 % by weight of overbased calcium phenate (having a total base number of 250 mg-KOH/g) were combined and used as the metal-containing, detergent dispersant of the component (a). Its physical properties were evaluated, and the data obtained are given in Table 1.

### [Example 3]

A lubricating oil composition was prepared in the same manner as in Example 1, except that a polyamine (having a C/N weight ratio of 1.22) composed of 50 mol% of diethylenetriamine and 50 mol% of triethylenetetramine was used in preparing the succinimide compound for the component (b). Its physical properties were evaluated, and the data obtained are given in Table 1.

### [Example 4]

A lubricating oil composition was prepared in the same manner as in Example 1, except that ethylenediamine (having a C/N weight ratio of 0.86) was used as the polyamine in preparing the succinimide compound for the component (b). Its physical properties were evaluated, and the data obtained are given in Table 1.

### [Comparative Example 1]

A lubricating oil composition was prepared in the same manner as in Example 1, except that tetraethylenepentamine (having a C/N weight ratio of 1.37) was used as the polyamine in preparing the succinimide compound for the component (b). Its physical properties were evaluated, and the data obtained are given in Table 1.

### [Comparative Example 2]

A lubricating oil composition was prepared in the same manner as in Example 1, except that polybutenylsuccinic anhydride of which the polybutenyl group had a mean molecular weight of 180 was used as the succinic acid compound and ethylenediamine (having a C/N weight ratio of 0.86) was used as the polyamine in preparing the succinimide compound for the component (b) and that 7.0 % by weight of overbased calcium sulfonate (having a total base number of 510 mg-KOH/g) and 14.3 % by weight of overbased calcium phenate (having a total base number of 250 mg-KOH/g) were combined and used as the metal-containing, detergent dispersant of the component (a). Its physical properties were evaluated, and the data obtained are given in Table 1.

### [Comparative Example 3]

A lubricating oil composition was prepared in the same manner as in Example 1, except that the molar ratio of polybutenylsuccinic anhydride/diethylenetriamine was 1.5 in preparing the succinimide compound for the component (b). Its physical properties were evaluated, and the data obtained are given in Table 1.

**Table 1-1**

| | Example 1 | Example 2 | Example 3 | Example 4 |
|---|---|---|---|---|
| Mean molecular weight of polybutenyl group | 1,000 | 1,000 | 1,000 | 1,000 |
| Polyamine (C/N weight ratio) | diethylene-triamine (1.14) | diethylene-triamine (1.14) | diethylene-triamine and triethylene-tetramine (1.22) | ethylene-diamine (0.86) |
| Succinic acid/polyamine (molar ratio) | 1.0 | 1.0 | 1.0 | 1.0 |
| Succinimide (wt.%) | 0.5 | 0.5 | 0.5 | 0.5 |
| Ca sulfonate (TBN 510) (wt.%) | 14.0 | 7.0 | 14.0 | 14.0 |
| Ca phenate (TBN 250) (wt.%) | - | 14.3 | - | - |
| Internal pressure increase after 30 seconds (kg/cm²) | 2.92 | 2.75 | 2.55 | 2.60 |
| Stability test | ○ | ○ | ○ | ○ |

**Table 1-2**

| | Comp. Ex. 1 | Comp. Ex. 2 | Comp. Ex. 3 |
|---|---|---|---|
| Mean molecular weight of polybutenyl group | 1,000 | 180 | 1,000 |
| Polyamine (C/N weight ratio) | tetraethylene-pentamine (1.37) | ethylene-diamine (0.86) | diethylene-triamine (1.14) |
| Succinic acid/polyamine (molar ratio) | 1.0 | 1.0 | 1.5 |
| Succinimide (wt.%) | 0.5 | 0.5 | 0.5 |
| Ca sulfonate (TBN 510) (wt.%) | 14.0 | 7.0 | 14.0 |
| Ca phenate (TBN 250) (wt.%) | - | 14.3 | - |
| Internal pressure increase after 30 seconds (kg/cm²) | 1.41 | 1.75 | 1.90 |
| Stability test | × | × | O |

### INDUSTRIAL APPLICABILITY

In the lubricating oil composition for internal combustion engines of the invention, the speed of acid neutralization is extremely high, and the composition has the advantage of good corrosion wear resistance against SOx that may be discharged by internal combustion engines in large quantities. In particular, the composition is favorable to cylinder oil for 2-cycle engines for ships.

## Claims

1. Use of a lubricating oil additive containing from 0.25 to 80% by weight of a succinimide compound as an ashless detergent dispersant for lubricating oils, wherein the succinimide compound is obtainable by reacting a polyamine having a carbon/nitrogen weight ratio of from 0.85 to 1.25 with a succinic acid compound of the following general formula (I) or (II) in a molar ratio to the polyamine of from 0.95 to 1.40: 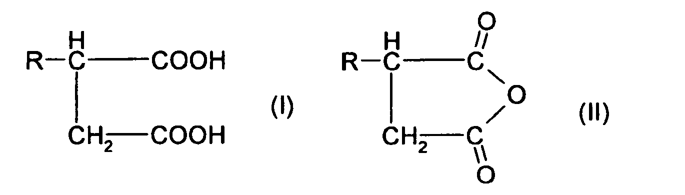 wherein R represents a polybutenyl group or an ethylene-propylene copolymer residue having a number-average molecular weight of from 700 to 2,300.

2. A lubricating oil composition for internal combustion engines, which comprises a lube base oil having a kinematic viscosity at 100°C of from 10 to 25 mm²/sec, and (a) at least one compound selected from the group consisting of overbased sulfonates and phenates of alkaline earth metals, and (b) the succinimide compound as described in claim 1, wherein the lubricating oil composition has a total base number of from 40 to 100 mg-KOH/g and the component (a) has a total base number of from 100 to 600 mg-KOH/g as measured according to the perchloric acid method in JIS K-2501, the component (a) accounts for from 5 to 30 % by weight and the component (b) for from 0.1 to 3 % by weight based on the total weight of the composition.

## Patentansprüche

1. Verwendung eines Schmieröladditivs, enthaltend 0,25 bis 80 Gew.-% einer Succinimid-Verbindung als aschefreies Detergens-Dispergiermittel für Schmieröle, wobei die Succinimid-Verbindung erhältlich ist durch Umsetzung eines Polyamins mit einem Kohlenstoff/Stickstoff-Gewichtsverhältnis von 0,5 bis 1,25 mit einer Bernsteinsäureverbindung der folgenden allgemeinen Formel (I) oder (II) in einem molaren Verhältnis zum Polyamin von 0,95 bis 1,40: 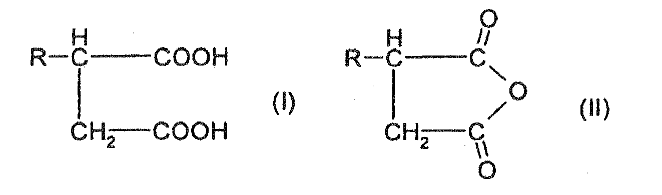 wobei R eine Polybutenylgruppe oder einen Ethylen-Propylen-Copolymerrest mit einem zahlenmittleren Molekulargewicht von 700 bis 2300 darstellt,

2. Schmierölzusammensetzung für Verbrennungsmotoren, welche ein Basisschmieröl mit einer kinematischen Viskosität bei 100°C von 10 bis 25 mm²/sec und (a) mindestens eine Verbindung, die ausgewählt wird aus der aus überbasischen Sulfonaten und Phenaten von Erdalkalimetallen bestehenden Gruppe und (b) die Succinimidverbindung wie in Anspruch 1 beschrieben enthält, wobei die Schmierölzusammensetzung eine Gesamtbasenzahl von 40 bis 100 mg-KOH/g aufweist und die Komponente (a) eine Gesamtbasenzahl von 100 bis 600 mg-KOH/g aufweist, gemessen nach der Perchlorsäuremethode in JIS K-2501, wobei die Komponente (a) 5 bis 30 Gew,-% ausmacht und die Komponente (b) 0,1 bis 3 Gew,-% ausmacht, bezogen auf das Gesamtgewicht der Zusammensetzung.

## Revendications

1. Utilisation d'un additif de huile lubrifiante contenant de 0,25 à 80 % par poids d'un composé succinimide en tant qu'un dispersant détergent sans cendres pour des huiles lubrifiantes, dans laquelle le composé succinimide est obtenu par réaction d'une polyamine ayant un rapport pondéral de carbure/azote de 0,85 à 1,25 avec un composé acide succinique de la formule générale suivante (I) ou (II) dans un rapport molaire à la polyamine de 0,95 à 1,40 : 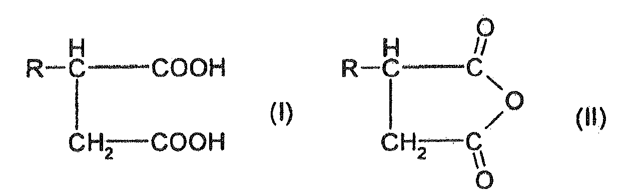 dans laquelle R représente un groupe polybutylène ou un résidu d'éthylène-propylène copolymère ayant un poids moléculaire moyen en nombre de 700 à 2300.

2. Composition d'huile lubrifiante pour des moteurs à combustion interne comprenant une huile de base lubrifiant ayant une viscosité cinématique à 100 °C de 10 à 25 mm²/sec et (a) au moins un composé sélectionné parmi le groupe consistant en les sulfonates hyperbasiques et les phénates de métaux alcalino-terreux, et (b) le composé succinimide selon la revendication 1, dans lequel la composition d'huile lubrifiante a un nombre de base total de 40 à100 mg-KOH/g et le composé (a) a un nombre de base total de 100 à 600 mg-KOH/g tel que mesuré selon la méthode d'acide perchlorique dans JIS K-2501, le composé (a) comprend de 5 à 30 % en poids et le composé (b) comprend de 0,1 à 3% en poids relatif au poids total de la composition.
